# EUROPEAN PATENT SPECIFICATION

(11) **EP 0 393 756 B1**
(45) Date of publication and mention of the grant of the patent: **11.01.1995**
(21) Application number: 90200893.7
(22) Date of filing: 12.04.1990
(51) Int. Cl.: G09G 1/16, G09G 1/28

(54) **Character generator for displaying characters with a shadow on a display screen**
Zeichengenerator zur Wiedergabe von Zeichen mit einem Schatten auf einem Bildschirm
Générateur de caractères pour reproduire sur un écran des caractères à ombre

(30) Priority: 20.04.1989 NL 8900988
(43) Date of publication of application: 24.10.1990
(73) Proprietor: Philips Electronics N.V., 5621 BA Eindhoven (NL)
(72) Inventor: Eland, Rudolf, NL-5656 AA Eindhoven (NL)
(74) Representative: Steenbeek, Leonardus Johannes

(56) References cited:
- US-A- 3 918 039
- US-A- 4 408 198

## Description

### BACKGROUND OF THE INVENTION

### FIELD OF THE INVENTION

The invention relates to a character generator for displaying alphanumerical and graphic characters on a display screen, which characters are displayed simultaneously with a video picture. Such a character generator is used, for example, in television receivers for displaying operating information (On Screen Display) and for displaying information which is supplied in an encoded form by an external source (Teletext). These character generators are also used in video cameras and camera recorders for making titles and the like, and in Compact Disc players for displaying Compact Disc-recorded data.

### DESCRIPTION OF THE PRIOR ART

A prior art character generator for displaying characters on a display screen is disclosed in US-A-3,918,039. The known character generator comprises means for generating character codes of the characters to be displayed, pixel addressing means for generating a first pixel address indicative of one or more pixels of a character to be displayed, a pixel generator for generating a first color selection signal for the pixels to be displayed in response to the character code and the first pixel address, and means for generating a foreground color and a background color in response to the first color selection signal.

The means for generating the character codes generally takes the form of a display refresh memory in which the codes for the characters to be displayed are stored and which is read at the picture refresh rate. The character codes, *e.g.* 7-bit numbers, are applied to the pixel generator in which a matrix of, for example, 6 pixels horizontally by 10 pixels vertically, is stored for each displayable character. The pixel generator generates a color selection signal for the pixels to be displayed. The color selection signal is applied to a selector with which a foreground color signal or a background color signal is selected. The pixels in the foreground color determine the shape of the character on the display screen. For simple graphic symbols the pixel generator further often comprises a logic network which derives the color selection signal directly from the character code.

The foreground color and the background color may be fixed colors, for example black and white. They can also be programmed for each page, each row or even each character. Particularly the way in which colors in the character generator of a teletext decoder are generated may be mentioned: in fact, some of the 7-bit character codes are reserved for defining a color which remains valid until the end of the row or until a new color is defined in an identical way.

Often, a video picture and a text generated by the character generator must be displayed simultaneously. This is the case, for example, if a TV program is subtitled by means of teletext, or if operating information such as a program or channel number generated in the receiver is displayed. One method for simultaneously displaying a picture and characters is to blank the picture signal during a "box" comprising one or more rows or parts thereof. In this so-called "boxed" mode the readability is ensured but the blanking signal blanks a relevant portion of the video picture. A second method is to blank the picture signal only during the pixels in the foreground color. In this so-called "mixed" mode the visibility of the alphanumerical or graphic symbols is very much dependent on color and brightness differences between the characters and the video picture in the background.

An attractive arrangement for simultaneously displaying a video picture and characters is disclosed in the prior art document US-A-3,918,039. The character generator comprises a blanking circuit which blanks the picture signal not only during the pixels in the foreground color, but also during adjacent pixels in response to an edge key signal, hereinafter referred to as a further color selection signal. The displayed characters are thus provided with an edge or shadow in the background color by which the readability is considerably improved.

In the prior art character generator, the further color selection signal defining the adjacent pixels is obtained by delaying the displayed pixels in a delay circuit comprising line delay elements and dot delay elements. A similar arrangement for shadowing characters whose pixels have already been generated is disclosed in US-A-4,408,198.

Delay elements, in particular line delay elements, require a substantial amount of chip area as each line delay necessarily comprises all the pixels of a picture line. Registers or memories and addititional circuitry forming such line delays contribute significantly to the cost price of a character generator.

### SUMMARY OF THE INVENTION

It is an object of the invention to provide a character generator comprising an alternative arrangement for shadowing the characters.

According to the invention, the character generator is characterized in that the pixel addressing means comprises means for alternately generating the first pixel address and a second pixel address, the second pixel address being indicative of one or more pixels adjacent to the pixels displayed. In response to said second pixel address, the pixel generator generates the further color selection signal.

The further color selection signal, representing the edge or shadow of a character, is now generated by quasi-simultaneous addressing of the display refresh memory rather than delaying pixels. In a preferred embodiment, the second pixel address is generated by adding a predetermined value to the first pixel address. Line delay elements are then not required at all. The second pixel address may also be obtained by delaying the first pixel address by a line period. This is still advantageous over delaying the pixels themselves, in particular in high-resolution character generators having many horizontal pixels per character.

The shadow may be displayed to the left, right, above or below the original character. A plurality of shadows may be generated, and subsequently combined, by applying further pixel addresses. It is particularly possible to give a character a complete contour in this way.

The shadow of the characters is displayed in the background color. The displayed characters are clearly visible against any video picture if background color and foreground color are contrasting colors. The character generator is very useful as a replacement for the "boxed" mode for displaying teletext subtitles. Only the most necessary portion of the video picture is now blanked, while the functional character of foreground and background colors (defined by the broadcaster) is maintained.

### 3. DESCRIPTION OF EMBODIMENTS

### 3.1 Brief description of the Figures

Embodiments of the invention will now be described in greater detail with reference to the accompanying drawings in which
Fig. 1 shows diagrammatically the structure of a television receiver with a teletext decoder;
Fig. 2 shows a prior-art character generator;
Figs. 3A and 3B show examples of characters stored in a character memory;
Fig. 4 shows a prior-art blanking circuit;
Fig. 5 shows a first embodiment of a character generator according to the invention;
Figs. 6A to 6C show blanking circuits for use in the character generator shown in Fig. 5;
Figs. 7A to 7D show examples of characters displayed on a display screen simultaneously with a video picture;
Fig. 8 shows a second embodiment of a character generator according to the invention.

### 3.2 General structure of a television receiver

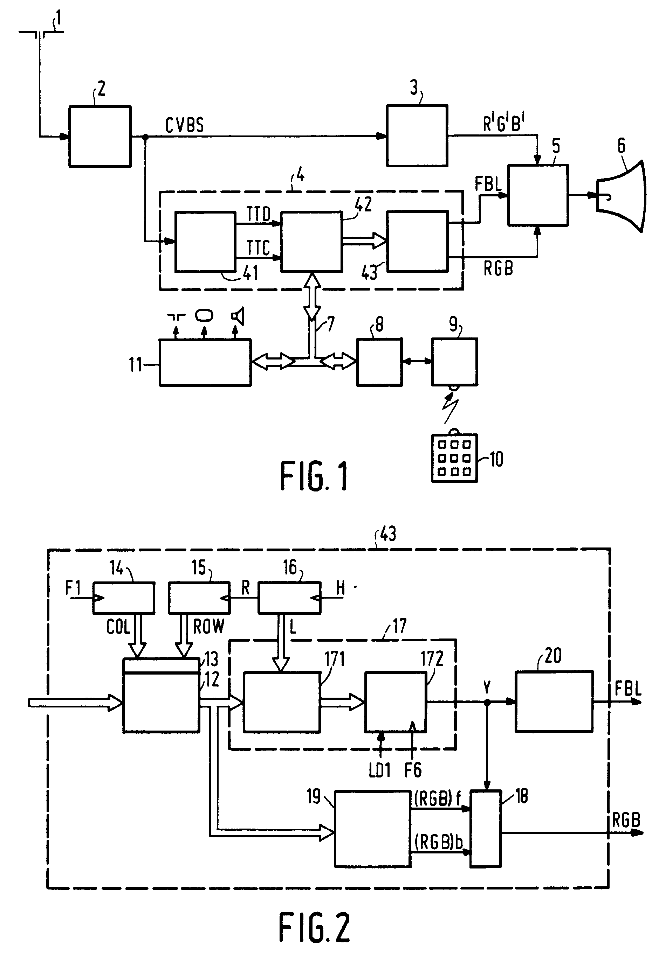

A television receiver with a teletext decoder is shown as an embodiment, with the character generator being integrated in the teletext decoder. Fig. 1 shows diagrammatically the structure of such a television receiver. The transmitter signals received at an aerial 1 are applied to a tuning and demodulation circuit 2. The obtained composite video signal CVBS of the selected television program is applied to a color decoder 3 and to a teletext decoder 4. In the normal operating condition of the receiver a picture signal R′G′B′ in the form of elementary color signals generated by the color decoder 3 is applied to a display screen 6 via a first input of a control circuit 5, in order that the user can watch the received picture signal.

Teletext decoder 4 comprises a slicing circuit 41 which regenerates the digital teletext data signal TTD and the associated clock signal TTC from the applied composite video signal CVBS, an acquisition circuit 42 which can capture at least one teletext page from the teletext data signal TTD, and a character generator 43 for storing and displaying the captured teletext page. Teletext decoder 4 is also connected to an operating unit circuit 8 by means of a command bus 7. Teletext decoder 4 receives, inter alia, the number of the teletext page to be captured and displayed from operating unit 8 via command bus 7 which is in the form of, for example, a serial bus. More particularly, it is also possible to apply character information, which is generated by operating unit 8, to character generator 43 via command bus 7 and acquisition circuit 42, for example, for displaying operating menus and the like.

Character generator 43 processes the applied teletext page or operating information in a manner to be further described to a character signal RGB in the form of elementary color signals and applies this character signal to a second input of control circuit 5. Character generator 43 also generates a blanking signal FBL, with which control circuit 5 is operated and with which the display of picture signal R′G′B′ from color decoder 3 is blanked.

Operating instructions from the user are generated in a (remote control) operating unit 10 and applied to operating unit 8 via a receiver circuit 9. Furthermore, an interface 11 enabling operating unit 8 to tune to transmitters, control picture brightness and sound volume and the like is connected to command bus 7. This is shown by means of the appropriate symbols in the Figure.

### 3.3 General structure of a character generator

Fig. 2 shows the structure of a known character generator 43 which is adapted to display a page of 24 rows of 40 characters each on the display screen. The 7-bit character codes of the characters to be displayed are stored in a page memory 12. For the purpose of display, page memory 12 is addressed by a column counter 14 and a row counter 15 via a memory interface 13. Column counter 14 is controlled by a column clock signal F1 having a frequency of, for example 1 MHz so that a column number COL is generated every µsec. In order to address 40 columns in page memory 12, column number COL comprises 6 bits. Row counter 15 receives a row clock signal R from a first output of a line counter 16 which is controlled by a line clock signal H. In the TV system which is herein assumed to be a PAL system, the frequency of this line clock signal is 15625 Hz. Line counter 16 is a divide-by-10 counter so that row counter 15 generates a new row number ROW each time after 10 TV lines. In order to address 24 rows in page memory 12, row number ROW comprises 5 bits. Column numbers COL and row numbers ROW are applied to a memory interface 13 which converts the 6-bit column number and the 5-bit row number in known manner to a 10-bit memory address for successively addressing the 24*40 = 960 character codes in page memory 12. The character codes read from page memory 12 are successively applied to a first input of a character memory 171 which forms part of a pixel generator 17, and to a color signal generator 19.

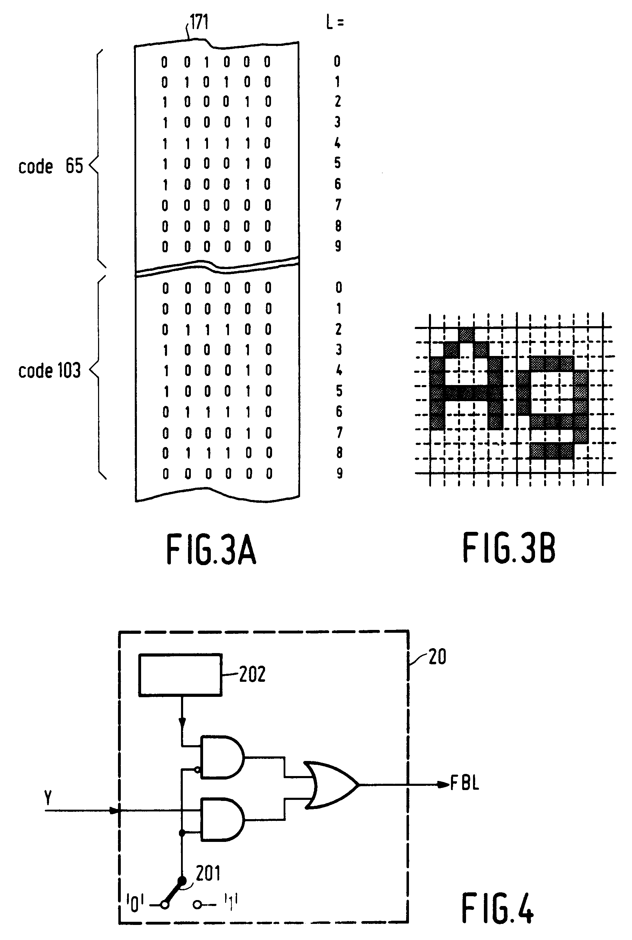

The shape of all displayable characters is stored in a so-called dot matrix of, for example 6*10 color selection bits in character memory 171, each color selection bit representing a pixel of the character on the display screen. In this way each character is defined in terms of 10 superjacent character segments of 6 pixels. The pixels with color selection bit "1" determine the shape of the symbol to be displayed. Fig. 3A shows by way of example the dot matrix of the letter "A" which has character code 65 in practice, as well as the dot matrix of the letter "g" which has character code 103 in practice. Character memory 171 is of the read-only type so that the stored letter shapes are unchangeable. However, there are also character generators in which the color selection bits are programmable and in which the letter shapes can therefore be redefined in a dynamic manner.

A row of text comprises ten successive picture lines on the display screen. While 40 successive character codes are applied to the first input of character memory 171 during such a picture line, the line counter 16 formed as a divide-by-10 counter generates a picture line number L (L = 0 ... 9) which determines which of the ten picture lines is displayed at that moment. This picture line number L, is applied to a second input of character memory 171 for addressing the character segment which corresponds to the actual picture line.

The output of character memory 171 is applied to a parallel-series converter 172 which also forms part of pixel generator 17. In this parallel-series converter 172 the 6 color selection bits of the applied character segment are parallel loaded by means of a load signal LD1 and subsequently they are serially read by means of a pixel clock signal F6. Load signal LD1 has the same frequency as the previously mentioned column clock signal F1, so that the character segment of a new character is loaded in each column clock period (1 µsec). A binary signal whose actual value corresponds to the successive color selection bits obtained from the parallel-series converter 172 now appears at the output of this parallel-series converter. This signal is further referred to as color selection signal Y. The frequency of pixel clock signal F6 is a multiple of the frequency of load signal LD1, which multiple is equal to the number of color selection bits in a character segment. In the present example pixel clock signal F6 has a frequency of 6 MHz.

Color selection signal Y is applied to a selector 18, which further receives a foreground color signal (RGB)_{f} and a background color signal (RGB)_{b} from color signal generator 19. To this end color signal generator 19 decodes those character codes from page memory 12 which are reserved for defining character colors. If the color selection signal Y has a logic value "1", the foreground color signal will be selected in selector 18; if it is a logic "0", the background color signal will be selected. The output signal RGB of selector 18, which will be further referred to as character signal, is applied in the manner described hereinbefore to display screen 6 via the second input of control circuit 5. A blanking signal FBL, which is also supplied by the character generator and which is also applied to control circuit 5, determines whether the picture signal from color decoder 3 (FBL = "0") or the character signal from character generator 43 (FBL = "1") is displayed on display screen 6. Fig. 38 shows how the letters "A" and "g" are successively displayed on this display screen in the last-mentioned case. The foreground color is black and the background color is white in this Figure.

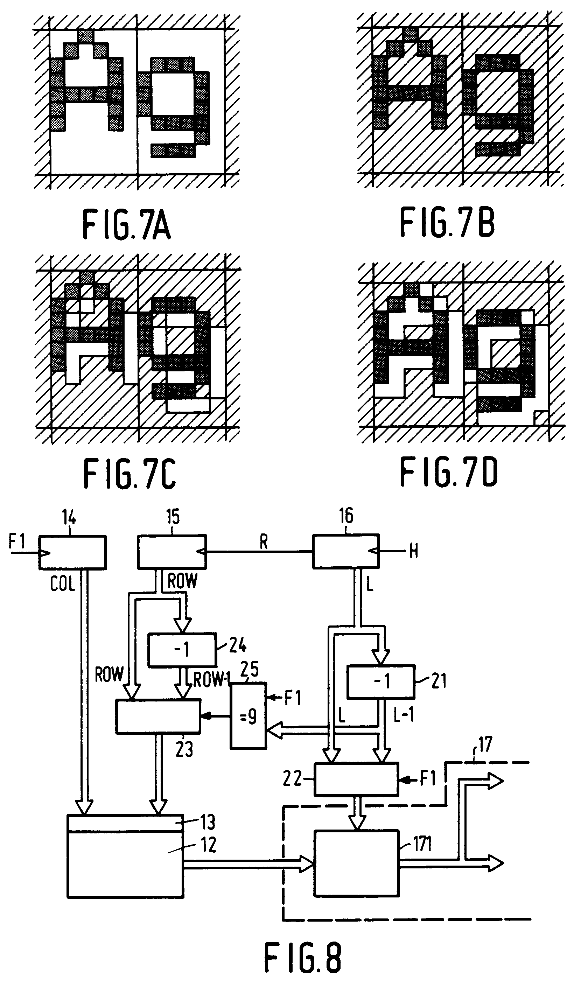

The blanking signal FBL is generated in a blanking circuit 20 which is formed in the way as shown in Fig. 4 for a known character generator. In a first (shown) state of a mode switch 201 the blanking signal FBL is generated by a "box" generator 202. In this so-called "boxed" mode the video picture is blanked during a predetermined "box" which comprises, for example one or more character rows or parts of rows. Fig. 7A shows its effect on a display screen. In this Figure the video picture is shaded. In a second state of switch 201 the blanking signal is generated by color selection signal Y from parallel-series converter 172. In this so-called "mixed" mode the video picture is only blanked for displaying pixels in the foreground color corresponding to color selection bit value "1". Now no pixels are displayed in the background color. Fig. 7B shows the effect of this mode on a display screen.

The drawbacks of these two methods for simultaneously displaying characters and video picture have already been mentioned in the opening paragraph: in the "boxed" mode a relatively large part of the video picture is blanked; the "mixed" mode does not provide a satisfactory readability if the foreground color and the video picture in the background have an insufficient contrast.

### 3.4 Embodiment of the character generator according to the invention

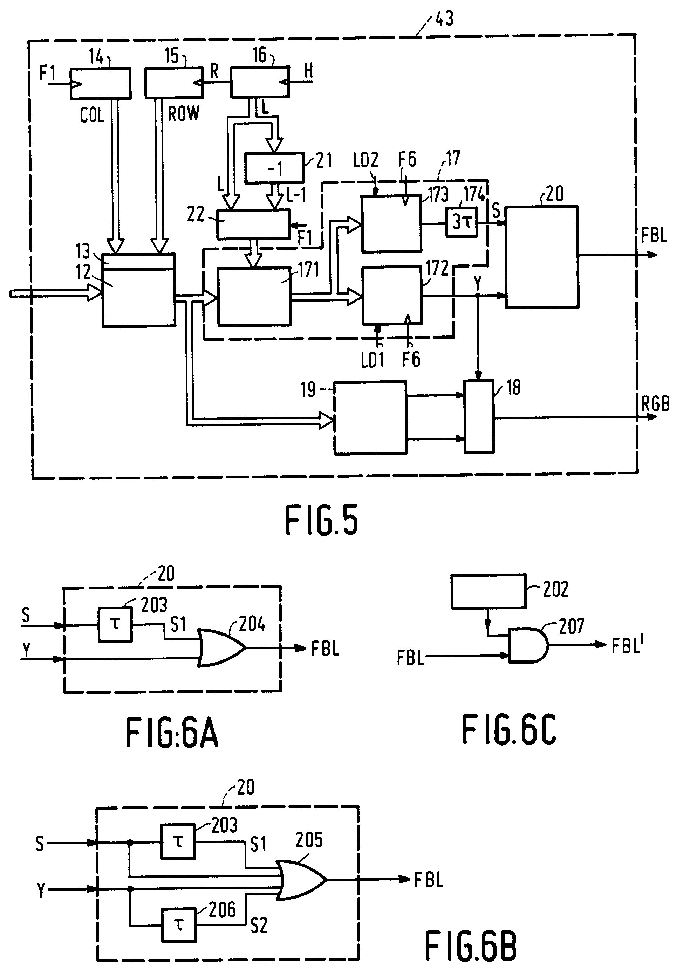

Fig. 5 shows an embodiment of a character generator according to the invention. The pixel generator 17 for generating color selection bits is now adapted to generate both the color selection bits of the actual pixels and the color selection bits of predetermined adjacent pixels in response to alternately receiving the picture line number L and the load signal LD1 on the one hand and a further picture line number L-1 and a further load signal LD2 on the other hand. picture line number L-1 is obtained by applying picture line number L of line counter 16 to an adder circuit 21. Adder circuit 21 is, for example, a combinatory network modulo-10 adding the value -1 to the picture line number L received at the input. The first picture line number L and the second picture line number L-1 are applied to a selector 22 which receives the column clock signal F1 as a selection signal. Selector 22 thereby alternately applies picture line number L-1 (in response to F1 = "1") and picture line number L tin response to F1 = "0") to character memory 171 during each column clock period.

A character segment comprising 6 color selection bits now appears twice per column clock period at the output of character memory 171. The character segments of character memory 171 are now also applied to a second parallel-series converter 173. Parallel loading of the 6 color selection bits in this parallel-series converter 173 is effected by means of a load signal LD2 which is phase-shifted with respect to load signal LD1. In this embodiment it has been assumed that the phase shift is 180°, which corresponds to 3 periods of pixel clock signal F6. As a result the character segment corresponding to picture line number L-1 is loaded in parallel-series converter 173 for each column clock period and 3 pixel periods later the character segment corresponding to picture line number L is loaded in parallel-series converter 172. In this respect it should be considered that L is the number of the actual picture line and L-1 is the number of the superjacent picture line.

The output of parallel-series converter 173 is delayed by three pixel periods in a delay element 174. Its output signal is then a replica of color selection signal Y delayed by exactly one line and will be referred to as shadow signal S. If the color selection signal Y has the value corresponding to that of the color selection bit of the actual pixel to be displayed, shadow signal S has the value corresponding to that of the color selection bit of the superjacent pixel.

The color selection signal Y and the shadow signal S are applied to blanking circuit 20. An embodiment of this blanking circuit is shown in Fig. 6A. Shadow signal S is applied to a further delay element 203 which delays the input signal by one pixel period. The output signal of this delay element is a shadow signal S1 which is shifted one line down and one pixel to the right with respect to color selection signal Y. In other words: if the color selection signal Y has the value corresponding to that of the color selection bit of the pixel to be displayed, shadow signal S1 will have the value corresponding to that of the color selection bit of the adjacent pixel situated to the top left thereof. Shadow signal S1 and color selection signal Y are applied to an input of an OR gate 204. The output of this OR gate is the new blanking signal FBL. It blanks the video picture, not only when a pixel is displayed in the foreground color (Y = "1") but also during the "shadow" of the adjacent pixel (S1 = "1"). While the video picture is being blanked, each pixel is displayed in the foreground or background color determined by selector 18. Fig. 7C shows the result on the display screen if the successive letters "A" and "g" are displayed simultaneously with a video picture.

One shadow signal S1 is used in the embodiment of blanking circuit 20 shown in Fig. 6A. However, it is also possible to make blanking of the video picture depend on more than one adjacent pixel. Fig. 6B shows an embodiment of a blanking circuit 20 which can be used for this purpose. An OR gate 205 now has four inputs. The color selection signal Y is applied to a first input, which signal ensures in a manner already described that the picture signal is blanked if a pixel must be displayed in the foreground color. Shadow signal S1 is applied to a second input, which signal generates the shadow of a pixel situated to the top left in a manner which has also been described. Shadow signal S is applied to a third input. This signal generates the shadow of a superjacent pixel. Lastly, a third shadow signal S2 is applied to a fourth input of OR gate 205. This third shadow signal is obtained by delaying the color selection signal Y by one pixel period in a delay element 206 so that it generates the shadow of a pixel situated to the left. Fig. 7D shows the effect of these measures on the display screen.

An attractive extension of the blanking circuit according to the invention is shown in Fig. 6C. The output signal FBL of the circuit shown in Fig. 6A or 6B is then applied to a first input of an AND gate 207, whose second input receives the "box" signal from the "box" signal generator 202 previously described (Fig. 4). By applying output signal FBL′ of this AND gate as a blanking signal to control circuit 5, the video picture is only blanked within a predetermined "box". This embodiment is attractive because teletext subtitles, which the TV editor always places in a "box" at the transmitter end, are now displayed while maintaining a maximum possible quantity of video picture, while the functional character of foreground and background colors, which is often essential in this application, is fully maintained.

In the embodiment of a character generator according to the invention shown in Fig. 5 the following should be considered: while the upper segment (corresponding to picture line number L = 0)of a character is being displayed, the modulo-10 operation in adder circuit 21 causes the shadowsignal to be obtained from the lower segment of the same character. To prevent the shadow of the lower side from being displayed at the upper side of a character, the lower character segment may only have logic values "0". This is generally complied with, because the lower character segment of a character also provides the required line spacing. However, this is not the case when displaying graphic symbols which are conventional in teletext decoders. They extend throughout the character matrix and may be displayed contiguously.

Fig. 8 shows an embodiment of a possible addressing of page memory 12 and character memory 171 which also generates a correct shadow under these circumstances. The input of memory interface 13 to which the row number is applied is now coupled to the output of row counter 15 via a selector 23 and an adder circuit 24. Adder circuit 24 receives the row number ROW and generates a row number ROW-1, for example, by adding the value -1 to the row number applied to the input. Selector 23 is controlled by a selection signal which is generated in a comparison circuit 25 in such a way that row number ROW-1 is selected if the lower character segment of the character is addressed (L-1 = 9) in character memory 171 for the purpose of generating shadow signal S. It is achieved thereby that the shadow signal S is obtained from the lower character segment of the superjacent character while the upper character segment of the actual character is being displayed.

Furthermore, it is to be noted that shadows can be generated in more variations. For example, a character may be provided with a shadow at its lower side as well as at its upper side. In this case not only the superjacent character segment is addressed, as described hereinbefore, for generating the required shadow signals while the pixels of a character segment are being displayed, but also the subjacent character segment is addressed. The shadow of a pixel may also be more than one pixel wide and more than one picture line high. Embodiments thereof are not described in detail because they are elaborations of the above-described embodiments which can be implemented by those skilled in the art on the basis of the foregoing description.

Finally, it should be noted that some functions can be realised in a different manner than has been described with reference to the embodiments. For example, the adder circuit 21 in Figs. 5 and 8 may be replaced by a delay element with which picture line number L-1 is obtained by delaying the picture line number L applied to the input by one TV line. Identically, the adder circuit 24 of rig. 8 may be replaced by a delay element generating row number ROW-1 by delaying the applied row number ROW by 10 TV lines by means of row clock signal R.

## Claims

1. A character generator for generating characters comprising n*m pixels on a display screen which is also adapted to display a picture signal, comprising:
means (12-15) for generating character codes of the characters to be displayed;
pixel addressing means (16) for generating a first pixel address (L) indicative of one or more pixels of a character to be displayed;
a pixel generator (171) for generating a first color selection signal (Y) for the pixels to be displayed, in response to the character code and the first pixel address;
means (18,19) for generating a foreground color and a background color in response to the first color selection signal (Y);
a blanking circuit (20) for blanking the picture signal in response to the first color selection signal and to a further color selection signal (S) representing adjacent pixels;
characterized in that the pixel addressing means comprises means (21,22) for alternately generating the first pixel address (L) and a second pixels address (L-1), the second pixel address being indicative of one of more pixels adjacent to the first pixels to be displayed and causing the pixel generator (171) to generate the further color selection signal (S).

2. A character generator as claimed in Claim 1, characterized in that the second pixel address (L-1) is obtained by adding (21) a predetermined value to the first pixel address (L).

3. A character generator as claimed in Claim 1, characterized in that the second pixel address (L-1) is obtained by delaying (21) the first pixel address (L) at least once by a period which corresponds to the display of a picture line on the display screen.

4. A character generator as claimed in any one of the preceding Claims, in which the means (12-15) for generating character codes of the characters to be displayed comprise a page memory (12) for receiving, storing and reading said character codes in response to an applied address (COL,ROW), characterized in that the address (ROW-1) of an adjacent character is applied to said page memory while the second pixel address (L-1) is applied to the pixel generator.

5. A character generator as claimed in Claim 4, characterized in that the address (ROW-1) of the adjacent character is obtained by adding (24) a predetermined value to the address (ROW) of the character to be displayed.

6. A character generator as claimed in Claim 4, characterized in that the address (ROW-1) of the adjacent character is obtained by delaying (24) the address (ROW) of the character to be displayed at least once by a period which corresponds to the display of a row of characters on the display screen.

7. A character generator as claimed in any one of the preceding Claims, which further comprises means (202) for generating a "box" signal which indicates which characters are to be displayed, characterized in that the blanking signal is only generated during the occurrence of the "box" signal.

8. A receiver of television signals, comprising:
a decoding circuit (3) for generating a picture signal to be displayed;
a character generator (4) for generating a character signal and a blanking signal;
a video control circuit (5) having a first input for receiving the picture signal, a second input for receiving the character signal, and a third input for receiving the blanking signal;
a display screen (6) coupled to an output of the video control circuit, characterized in that the character generator (4) is implemented as claimed in any one of the preceding Claims.

## Patentansprüche

1. Zeichengenerator zum Erzeugen von Zeichen mit n*m Pixeln an einem Wiedergabeschirm, der ebenfalls ein Bildsignal wiedergeben kann, mit:
Mitteln (12-15) zum Erzeugen von Zeichencodes der wiederzugebenden Zeichen;
Pixeladressierungsmitteln (16) zum Erzeugen einer ersten Pixeladresse (L), die für ein oder mehrere Pixel des wiederzugebenden Zeichens indikativ ist;
einem Pixelgenerator (171) zum Erzeugen eines ersten Farbselektionssignals (Y) für die wiederzugebenden Pixel in Antwort auf den Zeichencode und die erste Pixeladresse;
Mitteln (18, 19) zum Erzeugen eines Vodfergrunsfarbtons und eines Hintergrundfarbtons in Antwort auf das erste Farbselektionssignal;
einem Austastkreis (20) zum Austasten des Bildsignals in Antwort auf das erste Farbselektionssignal und auf ein weiteres Farbselektionssignal (S) das benachbarte Pixel darstellt;
dadurch gekennzeichnet, daß die Pixeladressierungsmittel Mittel (21, 22) aufweisen zur alternativen Erzeugung der ersten Pixeladresse (L) und der zweiten Pixeladresse (L-1), wobei die zweite Pixeladresse indikativ ist für ein oder mehrere Pixel in der Nähe der wiederzugebenden ersten Pixel, wodurch der Pixelgenerator (171) das weitere Farbselektionssignal (S) erzeugt.

2. Zeichengenerator nach Anspruch 1, dadurch gekennzeichnet, daß die zweite Pixeladresse (L-1) dadurch erhalten wird, daß zu der ersten Pixeladresse (L) ein vorbestimmter Wert hinzuaddiert (21) wird.

3. Zeichengenerator nach Anspruch 1, dadurch gekennzeichnet, daß die zweite Pixeladresse (L-1) dadurch erhalten wird, daß die erste Pixeladresse (L) um wenigstens einmal eine Periode, die der Wiedergabe eines Bildes an einem Wiedergabeschirm entspricht, verzögert wird.

4. Zeichengenerator nach einem der vorstehenden Ansprüche, wobei die Mittel (12-15) zum Erzeugen von Codes der wiederzugebenden Zeichen einen Seitenspeicher (12) aufweisen zum Empfangen, Speichern und Auslesen der genannten Zeichencodes in Antwort auf eine zugeführte Adresse (COL, ROW), dadurch gekennzeichnet, daß die Adresse (ROW-1) eines benachbarten Zeichens dem genannten Seitenspeicher zugeführt wird, während die zweite Pixeladresse (L-1) dem Pixelgenerator zugeführt wird.

5. Zeichengenerator nach Anspruch 4, dadurch gekennzeichnet, daß die Adresse (ROW-1) des benachbarten Zeichens dadurch erhalten wird, daß ein vorbestimmter Wert zu der Adresse (ROW) des wiederzugebenden Zeichens (21) hinzuaddiert wird.

6. Zeichengeneratornach Anspruch 4, dadurch gekennzeichnet, daß die Adresse (ROW-1) des benachbarten Zeichens dadurch erhalten wird, daß die Adresse (ROW) des wiederzugebenden Zeichens um wenisgtens eine Periode verzögert (24) wird, die der Wiedergabe einer Zeile von Zeichen an dem Wiedergabeschirm entspricht.

7. Zeichengenerator nach einem der vorstehenden Ansprüche, der weiterhin Mittel (202) aufweist zum Erzeugen eines "Box)-Signals, das angibt, welche Zeichen wiedergegeben werden müssen, dadurch gekennzeichnet, daß das Austastsignal nur während des Auftritts des "Box"-Signals erzeugt wird.

8. Empfänger für Fernsehsignale, mit:
einem Decoder (3) zum Erzeugen eines wiederzugebenden Bildsignals;
einem Zeichengenerator (4) zum Erzeugen eines Zeichensignals und eines Austastsignals;
einer Videoregelschaltung (5) mit einem ersten Eingang zum Empfangen des Bildsignals, einem zweiten Eingang zum Empfangen des Zeichensignals, und einem dritten Eingang zum Empfangen des Austastsignals;
einem Wiedergabeschirm (6), der mit einem Ausgang der Videoregelschaltung gekoppelt ist,
dadurch gekennzeichnet, daß der Zeichengenerator (4) ausgebildet ist, wie in einem der vorstehenden Ansprüche beschrieben worden ist.

## Revendications

1. Générateur de caractères destiné à générer des caractères comprenant n*m pixels sur un écran d'affichage qui est également à même d'afficher un signal d'image, comprenant :
des moyens (12-15) pour générer des codes des caractères à afficher;
un moyen d'adressage de pixels (16) pour générer une première adresse de pixel (L) indiquant un ou plusieurs pixels d'un caractère à afficher;
un générateur de pixels (171) pour générer un premier signal de sélection de couleur (Y) pour les pixels à afficher, en réaction au code de caractère et à la première adresse de pixel;
des moyens (18, 19) pour générer une couleur d'avant-plan et une couleur d'arrière-plan en réaction au premier signal de sélection de couleur, et
un circuit de suppression (20) pour supprimer le signal d'image en réaction au premier signal de sélection de couleur et à un autre signal de sélection de couleur (S) représentant des pixels adjacents,
caractérisé en ce que le moyen d'adressage de pixel comprend des moyens (21, 22) pour générer en alternance la première adresse de pixel (L) et une deuxième adresse de pixel (L-1), la deuxième adresse de pixel étant indicative d'un ou plusieurs pixels adjacents aux premiers pixels à afficher et amenant le générateur de pixels (171) à générer l'autre signal de sélection de couleur (S).

2. Générateur de caractères selon la revendication 1, caractérisé en ce que la deuxième adresse de pixel (L-1) est obtenue en ajoutant (21) une valeur prédéterminée à la première adresse de pixel (L).

3. Générateur de caractères selon la revendication 1, caractérisé en ce que la deuxième adresse de pixel (L-1) est obtenue en retardant la première adresse de pixel (21) au moins une fois par période correspondant à l'affichage d'une ligne d'image sur l'écran d'affichage.

4. Générateur de caractères selon l'une quelconque des revendications précédentes, dans lequel les moyens (12-15) destinés à générer des codes des caractères à afficher comprennent une mémoire de page (12) pour recevoir, stocker et lire lesdits codes de caractères en réaction à l'application d'une adresse (COL, ROW), caractérisé en ce que l'adresse (ROW-1) d'un caractère adjacent est appliquée à ladite mémoire de page, tandis que la deuxième adresse de pixel (L-1) est appliquée au générateur de pixels.

5. Générateur de caractères selon la revendication 4, caractérisé en ce que l'adresse (ROW-1) du caractère adjacent est obtenue en ajoutant (24) une valeur prédéterminée à l'adresse (ROW) du caractère à afficher.

6. Générateur de caractère selon la revendication 4, caractérisé en ce que l'adresse (ROW-1) du caractère voisin est obtenue en retardant (24) l'adresse (ROW) du caractère à afficher au moins une fois par période correspondant à l'affichage d'une rangée de caractères sur l'écran d'affichage.

7. Générateur de caractères selon l'une quelconque des revendications précédentes, qui comprend par ailleurs un moyen (202) pour générer un signal "en carré" qui indique les caractères à afficher, caractérisé en ce que le signal de suppression n'est généré que pendant l'apparition du signal "en carré".

8. Récepteur de signaux de télévision, comprenant :
un circuit de décodage (3) pour générer un signal d'image à afficher;
un générateur de caractères (4) pour générer un signal de caractère et un signal de suppression;
un circuit de commande vidéo (5) ayant une première entrée pour recevoir le signal d'image, une deuxième entrée pour recevoir le signal de caractère et une troisième entrée pour recevoir le signal de suppression, et
un écran d'affichage (6) relié à une sortie du circuit de commande vidéo,
caractérisé en ce que le générateur de caractères (4) est mis en oeuvre selon l'une quelconque des revendications précédentes.
